# EUROPEAN PATENT SPECIFICATION

(11) **EP 3 185 702 B1**
(45) Date of publication and mention of the grant of the patent: **09.04.2025**
(21) Application number: 15757206.6
(22) Date of filing: 26.08.2015
(51) Int. Cl.: A23L 33/10, A23F 3/16, A23F 3/18, A23F 3/22, A23F 3/30, A23F 3/40, A23F 5/36, A23L 2/395, A23L 2/56, A23L 23/10, A23L 27/10, A23L 27/00, A23L 33/105, A23L 33/21, A23L 5/20, A23P 30/10, A23P 30/20, A23P 30/25, A47G 19/00

(54) **METHOD FOR MAKING RECONSTITUTED PLANT MATERIAL USING CO-EXTRUSION**
VERFAHREN ZUR HERSTELLUNG VON REKONSTRUIERTEM PFLANZENMATERIAL MITTELS CO-EXTRUSION
PROCÉDÉ DE FABRICATION DE MATÉRIAU VÉGÉTAL RECONSTITUÉ À L'AIDE DE PROCÉDÉS DE CO-EXTRUSION

(30) Priority: 27.08.2014 EP 14182429
(43) Date of publication of application: 05.07.2017
(73) Proprietor: SWM Luxembourg, 5326 Contern (LU)
(72) Inventor: ROUSSEAU, Cédric, F-72000 Le Mans (FR)
(74) Representative: Plasseraud IP
(86) International application number: PCT/EP2015/069515
(87) International publication number: WO 2016/030409

(56) References cited:
- US-A- 6 110 511
- US-A1- 2013 280 320
- A. J. JACOBS: "Dinner Is Printed - NYTimes.com", NEW YORK TIMES SUNDAY REVIEW, 21 September 2013 (2013-09-21), pages 1 - 5, XP055150793, Retrieved from the Internet <URL:http://www.nytimes.com/2013/09/22/opinion/sunday/dinner-is-printed.html?pagewanted=all> [retrieved on 20141104]
- DATABASE WPI Week 200147, Derwent World Patents Index; AN 2001-435536, XP002731963, "Biodegradable plastic molding e.g. food containers, contains active ingredient selected from tea extract, tea powder, catechin, saponin and/or tannin (acid), in the surface and/or in the inner side"

## Description

### Field of the Invention

The present invention relates to a method for making products of reconstituted plant material using extrusion proces, wherein the reconstituted plant material comprises a fibrous plant product and a plant extract applied thereto. Further, the invention relates to the products obtained by these methods. The plants used may be all plants comprising one or more substances of interest for an edible product.

### Background of the Invention

Today, materials originating from a plant are used in many applications. Such materials are consumed, e.g. as food, food supplement, medicine, for cosmetic reasons or simply for pleasure (taste, color, shape). Native or processed plants can be consumed in different forms, e.g. fresh, dehydrated, cooked, fermented or concentrated (extracts). It is known that food quality has a major impact on health and that plant based materials provide many essential nutrients. It is, for instance, recommended to eat five fruits and vegetables a day to receive a sufficient amount of essential substances such as proteins, sugars, lipids, amino acids, vitamins, polyphenols and aromatic derivates, as well as soluble and insoluble fibers.

People tend to complement or even substitute direct vegetal product consumption (vegetals in their original form) by plant-based material in form of pills, capsules, gums, drops, powders or the like to receive sufficient essential substances. Plant-based material is consumed not only as food supplement but also as nutraceutics, for beauty (e.g. anti-aging), health or traditional medicine/phytotherapy.

However, often there is less time and motivation to deal with such food supplements, as the use of such products might not be straightforward or easy to handle.

Therefore, there is a need to improve products originating from plant materials, e.g., for nutraceutical or phytotherapeutical or food supplement or food use. In particular, it is desirable to provide such products in a form which is easy to use and attractive for the consumer. Also, such products should provide - improved sensory characteristics such as taste, flavor and/or aroma.

US 2013/0280320 discloses a method for producing articles of plants origin impregnated with at least one liquid vegetal substance.

### Summary of the Invention

The invention relates to a method for making products of reconstituted plant materials using extrusion proces.

Indeed, the invention is directed to a method of manufacturing a product comprising fibrous plant residues and plant extracts, the method comprising the steps of:
a. extracting substances of plants to obtain plant extracts and fibrous plant residues;
b. separating the plant extracts from the fibrous plant residues;
c. feeding two or more different fibrous plant residues into two or more separate extruders, and then,
d. separately extruding the two or more different fibrous plant residues through die openings of the two or more separate extruder to obtain two or more extrudates, and
e. assemble the two or more extrudates to obtain a three dimensionally shaped product,

wherein the plant extracts are added to the two or more fibrous residues before and/or during and/or after step d),
wherein in step d) the two or more different fibrous plant residues are extruded in such a way that the product has different material densities to be able to absorb controlled amounts of liquid at certain locations such that the product expands in a controlled manner and assumes a desired shape when immersed into a liquid.

The fibrous plant residues may comprise solid parts of a plant and the plant extract may comprise substances extracted from a plant. The fibrous plant residues may have at least partially fibrous properties and can comprise substances from one or more specific parts of one or more plants, e.g. a blend of different plants. Certain substances can be present only in certain parts of a plant, e.g. in one or more of the root, stem, trunk, caulis, leaf, lamina, fruit, flower, seed or bark of a plant. The plant extract may be soluble, e.g. water-soluble, or dispersible.

In a still further embodiment, not part of the present invention, a product comprising a fibrous plant product and a plant extract manufactured in accordance with the inventive method is disclosed.

### Brief Description of the Drawings

Fig. 1 is a flow diagram of the inventive process.
Fig. 2A shows an exemplary extrusion die or nozzle form.
Fig. 2B is a top view of an extruded product and respective volume change, e.g. an apple for tea with apple flavor.
Fig. 3 shows a cup obtainable by the inventive method.
Fig. 4 shows an example of origami folds obtainable with the method of the invention.

### Detailed Description of the Invention

The invention is directed to a method of manufacturing a product comprising fibrous plant residues and plant extracts, the method comprising the steps of:
a) extracting substances of plants to obtain plant extracts and fibrous plant residues;
b) separating the plant extracts from the fibrous plant residues;
c) feeding two or more different fibrous plant residues into two or more separate extruders, and then,
d) separately extruding the two or more different fibrous plant residues through die openings of the two or more separate extruder to obtain two or more extrudates, and
e) assemble the two or more extrudates to obtain a three dimensionally shaped product

wherein the plant extracts are added to the two or more fibrous residues before and/or during and/or after step d)
wherein in step d) the two or more different fibrous plant residues are extruded in such a way that the product has different material densities to be able to absorb controlled amounts of liquid at certain locations such that the product expands in a controlled manner and assumes a desired shape when immersed into a liquid.

The basic idea of the invention and the inventive method is to process one or more plants to obtain an at least partially fibrous residue and a plant extract. In the following the "at least partially fibrous residue" will also be referred to as "fibrous residue", "plant residue" or "residue" and are used interchangeably. It should be noted that the residue is not always fibrous but this depends on the plants used and the respective extraction process. Also, the "plant extract" will be referred to as "extract". Both the fibrous residue and the plant extract can be processed and combined to obtain a reconstructed or reconstituted version of the original plant, the reconstituted plant product, the properties of which can be controlled depending on the amount and type of substances used. In this way one can accelerate or even control the release or extraction rate of substances. Also, there can be higher concentrations of certain or all substances as compared to the natural plant. Also other materials not originating from a plant can be added to alter the properties of the resulting product, e.g. to obtain certain mechanical properties or to add a flavor or to improve control of the releasing rate of all or certain substances.

The products obtained by the inventive process can be consumed directly or can be used to make a consumable product by way of transferring the flavor, taste and/or aroma, for example when used as a container, wrapping paper, or the like, as explained in detail below. Thus, the products obtained can be consumed directly (or indirectly), e.g. by eating, drinking, chewing, swallowing, gargling, sucking, chewing or the like.

In step a) of the inventive method, one or more plant components (plant material or plant furnish) such as, for example, roots, stems, trunks, caulis, laminas, fruits, flowers, seeds, scraps, leaves, fines, dust, bark and/or shorts, are initially mixed with a solvent or a mixture of different solvents. The solvent may be selected from any known solvent, such as polar protic, apolar protic, polar aprotic, apolar aprotic solvents, or mixtures thereof. Examples of solvents are, for example, but not limited to, water, ethanol, toluene, and the like. In case of an aqueous solvent system, the water content of the aqueous solvent can, in some instances, be greater than 50% by weight of the solvent. In one embodiment, the water content is at least about 70%, or at least about 80%, or at least about 90% or about 100% by weight of the solvent. Deionized water, distilled water or tap water may be employed. The amount of the solvent in the suspension can vary widely, but is generally added in an amount from about 75% to about 99% by weight of the suspension. However, the amount of solvent can vary with the nature of the solvent, the temperature at which the extraction is to be carried out, and the type of plant components.

In one embodiment, the water used for extraction is hot water, preferably of about 30 °C to 100 °C, about 40 °C to 90 °C, or about 50 °C to 80 °C, or more preferably of about 70 °C.

After forming the solvent/plant furnish mixture, some or all of a soluble extracts fraction of the furnish mixture may be separated from the mixture. If desired, the aqueous solvent/plant furnish mixture can be agitated during extraction by stirring, shaking or otherwise mixing the mixture in order to increase the rate of extraction.

The extraction time depends on the herbs, medicinal plants, tea, vegetables and/or spices subjected to the extraction process. In one embodiment of the invention, the extraction time is about 15 to 60 minutes, preferably 45 minutes. However, extraction may take even longer if necessary, for example, extraction may be carried out for about 0.5 hours to about 6 hours or up to about 7, about 8, about 9, about 10 hours or more. Moreover, although not required, typical extraction temperatures range from about 10 °C to about 100 °C depending on the solvent system used and the plants which should be extracted. In particular, the extraction temperature should be such that the plant components and/or the plant extracts are not destroyed or negatively altered by the temperature.

Prior to the extraction step an optional grinding, milling or cutting step can be used, in order to shred the plant or plant part and thus to break the plant's cell walls. Grinding, milling and/or cutting can be made by any conventional grinding, milling or cutting device and method known to the skilled person. One possible grinding method is cryogenic grinding. Cryogenic grinding, also known as freezer milling, freezer grinding, or cryomilling, is the act of cooling or chilling a material and then reducing it into a small particle size. Heat and oxidation reactions usually occur on the material with standard grinding technologies, at room temperature. Thanks to cryogenic grinding, enzymes, vitamins and many other active molecules are preserved from such reactions. This technology may be used to prepare medicinal plant powders.

Once extracted, the insoluble residue fraction can optionally be subjected to one or more mechanical refiners to produce a fibrous pulp. Some examples of suitable refiners can include disc refiners, conical refiners, and the like. The insoluble residue fraction can be utilized as such or further modified in step c) of the inventive method.

In some embodiments of the invention, a wet strength agent may be added to the fibrous portion in order to reduce potential degradation of the reconstituted material when it is brought into contact with a liquid (e.g. water), such as upon infusion in water. Any suitable wet strength agent preferably selected for food applications may be used such as polyamide-epichlorohydrin resins, polyamine-epichlorohydrin resins, poly(aminoamide)-epichlorohydrin resins, urea-formaldehyde resins; melamine-formaldehyde resins; alkyl ketene dimer; alkyl succinic anhydride; polyvinylamines; oxidized polysaccharides (such as oxidatively degraded starch); glyoxalated polyacrylamide resins; polyimines such as polyethyleneimine. Wet strength agents are well known to the skilled person and described in Ingredients Standards, such as BFR (Bundesinstitut für Risikobewertung) XXXVI and BFR XXXVI/1 or FDA (Food & Drug Administration) 21 CFR 176.170, FDA 21 CFR 176.110, FDA 21 CFR 176.120, FDA 21 CFR 176.1180. The wet strength agent is for example used in an amount of about 0.1 % w/w to about 20 % w/w, preferably of about 1 % w/w to about 10 % w/w, more preferably of about 5% w/w. In one embodiment the wet strength agent may be added to the plant extract or both the residue and the plant extract.

The extracting step may be performed using components of a single plant or of a blend of plants. Also one or more specific parts of one plant may be used or a mixture of specific parts of two or more plants may be used. In one embodiment, in particular with respect to a co-extrusion step, two or more different plants (or parts of different plants) are extracted separate from each other and the respective fibrous residues and/or extracts are used separately in the (co-) extrusion process or the respective fibrous residues and/or extracts are combined before, during or after the (co-) extrusion process.

Preferably, the method of the invention also allows for reduction of undesired compounds from the material, such as to selectively removing undesired components (natural ingredients, pesticides, impurities or the like). For example, it is possible to remove components from either the soluble portion (plant extract) or from the non-soluble portion (fibrous residue) or both by liquid-liquid extraction, physical adsorption, centrifugation, chromatography, crystallization, decantation, by use of a demister, drying, distillation, electrophoresis, elutriation, evaporation, solid phase or liquid-liquid extraction, flotation, flocculation, filtration (for example using membranes), vapor-liquid separation, and/or sublimation and other means well known to the skilled person, preferably before applying the plant extract to the fibrous residue.

The fibrous residue may comprise at least about 20%, at least about 30% or at least about 40% or at least about 50% or at least about 60 % or at least about 70% or at least about 80% or at least about 90% or about 100% by weight of fibrous residue from one plant. Similarly, the plant extract may comprises at least about 20%, at least about 30% or at least about 40% or at least about 50% or at least about 60 % or at least about 70% or at least about 80% or at least about 90% or about 100% by weight of plant extract from one plant.

Extraction may also be performed by means other than using hot water, namely by extraction with supercritical gases, such as carbon dioxide, or by using, for example, ethanol, hexane, acetone, R134a (1,1,1,2-tetrafluoroethane), carbon dioxide and hydrofluorocarbons. In one embodiment, the extraction can be carried out by using at least one solvent at room temperature and under atmospheric pressure. Extraction may also be performed by using a mixture of different solvents. In another embodiment, extraction may be performed using at least one solvent, such as for example R134a or carbon dioxide, at different temperatures and at different pressures and different states (liquid, gaseous subcritical or supercritical). For example, extraction may be performed using solvents in a liquid state (such as solvent that are volatile or non-volatile at room temperature), in a subcritical state (such as water at a temperature above 100 °C and a pressure above 1 bar), or in a supercritical state (such as carbon dioxide at a temperature above 31 °C and a pressure above 73 bar).

Certain plants may require specific extraction conditions (time, temperature, solid/liquid ratio) due to the ingredients contained therein, which may be temperature sensitive or must not be subjected to certain extraction conditions. For example, extraction of lycopene from tomatoes must be performed by using specific enzymes to liberate the product from tomatoes cells. In connection with the present invention, processing aids may be used to improve extraction, such as pH modifiers (such as, for example, NaOH or organic acids), microwaves, pressure, ultrasound, enzymes such as for example proteases, amylases, cellulases, and/or pectinases. Whenever reference is made herein to "extraction", the term includes the aforementioned alternative extraction means. The extraction used in connection with the present invention can be performed in a continuous or semi-continuous or discontinuous matter. The extraction conditions are well known to the skilled artisan and described in standard text books, such as Handbook of Separation Techniques for Chemical Engineers, Third Edition (March 1997), Philip A. Schweitzer, McGraw-Hill Inc.

In one embodiment, the extraction and/or pressing may be performed using at least a portion of the plant material, fresh, frozen or dried, selected from one or more of root, stem, trunk, caulis, leaf, lamina, fruit, flower, seed of bark or the like.

Separation of the soluble portion (plant extract) from the non-soluble portion (fibrous residue) in step b) can be performed by separating the liquid phase from the solid phase, such as by filtration, with or without pressure, by centrifugation or other methods commonly used in the laboratory and well-known to the skilled person.

Once separated from the insoluble residue fraction of the plant solution, the soluble extracts fraction can optionally be concentrated using any known type of concentrator or concentration technology, such as a vacuum evaporator or the like. In one embodiment, the soluble component may be highly concentrated. Moreover, the concentrated or non-concentrated soluble extracts fraction can be utilized in any manner desired.

For certain applications it is desirable to adjust the composition by adding or removing ingredients or components to or from the plant extract and/or the non-soluble fibrous residue prior to producing the final product of the invention. Such adjustment may be performed to modify/improve chemical, physical and/or sensory characteristics of the finished product

In accordance with the present invention the plant is selected from the group consisting of herbs, medicinal plants, tea, vegetables and/or spices, including mixtures thereof, but is not limited to. The plants can also be selected from one or more plants containing anthoxyanins or carotinoids or flavonoids. The following list of plants (such as herbs, medicinal plants, tea, vegetables and/or spices) referred to herein provides an overview of exemplary plants that can be used in connection with the invention. It is noted that the list is not limiting, as any plant having one or more substances desired for use in the manufactured product can be utilized. Also, two or more plants may be used together in a product according to the invention. Examples of plants that are useful in accordance with the present invention are:
- culinary herbs and spices such as:
   Ajwain, carom seeds (*Trachyspermum ammi*)*,* Akudjura (*Solanum centrale*)*,* Alexanders (*Smyrnium olusatrum*)*,* Alkanet (*Alkanna tinctoria*)*,* Alligator pepper, mbongo spice (mbongochobi), hepper pepper (*Aframomum danielli, A. citratum, A. exscapum*)*,* Allspice (*Pimenta dioica*)*,* Angelica (*Angelica archangelica*)*,* Anise (*Pimpinella anisum*)*,* Aniseed myrtle (*Syzygium anisatum*)*,* Annatto (*Bixa orellana*)*,* Apple mint (*Mentha suaveolens*)*,* Asafoetida (*Ferula assafoetida*)*,* Asarabacca (*Asarum europaeum*)*,* Avens (*Geum urbanum*)*,* Avocado leaf (*Peresea americana*)*,* Barberry (*Berberis vulgaris* and other *Berberis spp.*)*,* Basil, sweet (*Ocimum basilicum*) *,* Basil, lemon (*Ocimum* × *citriodorum*)*,* Basil, Thai (O. *basilicum* var. *thyrsiflora*)*,* Basil, Holy (*Ocimum tenuiflorum*)*,* Bay leaf (*Laurus nobilis*)*, Bay leaf, Indian, tejpat, malabathrum,* Boldo (*Peumus boldus*)*,* Borage (*Borago officinalis*)*,* Black cardamom (*Amomum subulatum, Amomum costatum*)*,* Black mustard (*Brassica nigra*)*,* Blue fenugreek, blue melilot (*Trigonella caerulea*)*,* Brown mustard (*Brassica juncea*)*,* Caraway (*Carum carvi*)*,* Cardamom (*Elettaria cardamomum*)*,* Carob (*Ceratonia siliqua*)*,* Catnip (*Nepeta cataria*)*,* Cassia (*Cinnamomum aromaticum*)*,* Cayenne pepper (*Capsicum annuum*)*,* Celery leaf (*Apium graveolens*)*,* Celery seed (*Apium graveolens*)*,* Chervil (*Anthriscus cerefolium*)*,* Chicory (*Cichorium intybus*)*,* Chili pepper (*Capsicum spp*.)*,* Chives (*Allium schoenoprasum*)*,* Cicely, sweet cicely (*Myrrhis odorata*)*,* Cilantro, coriander greens, coriander herb (*Coriandrum sativum*)*,* Cinnamon, Indonesian (*Cinnamomum burmannii, Cassia vera*)*,* Cinnamon, Saigon or Vietnamese (*Cinnamomum loureiroi*)*,* Cinnamon, true or Ceylon (*Cinnamomum verum, C. zeylanicum*)*,* Cinnamon, white (*Canella winterana*)*,* Cinnamon myrtle (*Backhousia myrtifolia*)*,* Clary, Clary sage (*Salvia sclarea*)*,* Clove (*Syzygium aromaticum*)*,* Coriander seed (*Coriandrum sativum*)*,* Costmary (*Tanacetum balsamita*)*,* Cuban oregano (*Plectranthus amboinicus*)*,* Cubeb pepper (*Piper cubeba*)*,* Cudweed (*Gnaphalium* spp*.*), Culantro, culangot, long coriander (*Eryngium foetidum*)*,* Cumin (*Cuminum cyminum*)*,* Curry leaf (*Murraya koenigii*)*,* Curry plant (*Helichrysum italicum*)*,* Dill seed (*Anethum graveolens*)*,* Dill herb or weed (*Anethum graveolens*)*,* Elderflower (*Sambucus spp.*)*,* Epazote (*Dysphania ambrosioides*)*,* Fennel (*Foeniculum vulgare*)*,* Fenugreek (*Trigonella foenum-graecum*)*,* Filé powder, gumbo filé (*Sassafras albidum*)*,* Fingerroot, *krachai, temu kuntji* (*Boesenbergia rotunda*)*,* Galangal, greater (*Alpinia galanga*)*,* Galangal, lesser (*Alpinia officinarum*)*,* Galingale (*Cyperus spp.*)*,* Garlic chives (*Allium tuberosum*)*,* Garlic (*Allium sativum*)*,Garlic,* elephant (*Allium ampeloprasum var. ampeloprasum*)*,* Ginger (*Zingiber officinale*)*,* Ginger, torch, *bunga siantan* (*Etlingera elatior*) (Indonesia), *Golpar,* Persian hogweed (*Heracleum persicum*) (Iran), Grains of paradise (*Aframomum melegueta*)*,* Grains of Selim, Kani pepper (*Xylopia aethiopica*)*,* Horseradish (*Armoracia rusticana*)*, Houttuynia cordata* (Vietnam), Huacatay, Mexican marigold, mint marigold (*Tagetes minuta*)*,* Hyssop (*Hyssopus officinalis*)*,* Indonesian bay leaf, *daun salam* (*Syzygium polyanthum*)*,* Jasmine flowers (*Jasminum spp*.)*,* Jimbu (*Allium hypsistum*) (Nepal), Juniper berry (*Juniperus communis*)*,* Kaffir lime leaves, Makrud lime leaves (*Citrus hystrix*) (Southeast Asia), Kala zeera (or kala jira), black cumin (*Bunium persicum*) (South Asia), Kawakawa seeds (*Macropiper excelsum*) (New Zealand), *Kencur, galangal, kentjur* (*Kaempferia galanga*)*,Keluak, kluwak, kepayang (Pangium edule), Kinh gioi, Vietnamese balm* (*Elsholtzia ciliata*)*, Kokam* seed (*Garcinia indica*) (Indian confectionery), *Korarima,* Ethiopian cardamom, false cardamom (*Aframomum corrorima*) (Eritrea), *Koseret* leaves (*Lippia adoensis*) (Ethiopia), Lavender (*Lavandula spp.*)*,* Lemon balm (*Melissa officinalis*)*,* Lemongrass (*Cymbopogon citratus, C. flexuosus,* and other *Cymbopogon spp.*)*,* Lemon ironbark (*Eucalyptus staigeriana*) (Australia), Lemon myrtle (*Backhousia citriodora*) (Australia), Lemon verbena (*Lippia citriodora*)*,* Leptotes bicolor (Paraguay and southern Brazil), Lesser calamint (*Calamintha nepeta*)*, nipitella, nepitella* (Italy), Licorice, liquorice (*Glycyrrhiza glabra*)*,* Lime flower, linden flower (*Tilia spp.*)*,* Lovage (*Levisticum officinale*)*,* Mace (*Myristica fragrans*)*, Mahlab,* St. Lucie cherry (*Prunus mahaleb*)*,* Marjoram (*Origanum majorana*)*,* Marsh mallow (*Althaea officinalis*)*,* Mastic (*Pistacia lentiscus*)*,* Mint (*Mentha* spp.) 25 species, hundreds of varieties, Mountain horopito (*Pseudowintera colorata*) 'Pepper-plant' (New Zealand), Musk mallow, *abelmosk* (*Abelmoschus moschatus*)*,* Mustard, black, mustard plant, mustard seed (*Brassica nigra*)*,* Mustard, brown, mustard plant, mustard seed (*Brassica juncea*)*,* Mustard, white, mustard plant, mustard seed (*Sinapis alba*)*,* Nasturtium (*Tropaeolum majus*)*,* Nigella, *kalonji,* black caraway, black onion seed (*Nigella sativa*)*, Njangsa, djansang (Ricinodendron heudelotii)* (West Africa), Nutmeg (*Myristica fragrans*)*,* Neem, Olida (*Eucalyptus olida*) (Australia), Oregano (*Origanum vulgare, O. heracleoticum,* and other species), Orris root (*Iris germanica, I. florentina, I. pallida*)*,* Pandan flower, *kewra* (*Pandanus odoratissimus*)*,* Pandan leaf, screwpine (*Pandanus amaryllifolius,* Paprika (*Capsicum annuum*)*,* Paracress (*Spilanthes acmella, Soleracea*) (Brazil), Parsley (*Petroselinum crispum*)*,* Pepper: black, white, and green (*Piper nigrum*)*,* Pepper, Dorrigo (*Tasmannia stipitata*) (Australia), Pepper, long (*Piper longum*)*,* Pepper, mountain, Cornish pepper leaf (*Tasmannia lanceolata*)*,* Peppermint (*Mentha piperata*), Peppermint gum leaf (*Eucalyptus dives*)*, Perilla, shiso* (*Perilla spp.*)*,* Peruvian pepper (*Schinus molle*)*,* Pandanus amaryllifolius, Brazilian pepper or Pink pepper (*Schinus terebinthifolius*)*,* Quassia (*Quassia amara*) (bitter spice in aperitifs and some beers and fortified wines), Ramsons, wood garlic (*Allium ursinum*)*,* Rice paddy herb (*Limnophila aromatica*) (Vietnam), Rosemary (*Rosmarinus officinalis*)*,* Rue (*Ruta graveolens*)*,* Safflower (*Carthamus tinctorius*)*,* for yellow color, Saffron (*Crocus sativus*)*,* Sage (*Salvia officinalis*)*,* Saigon cinnamon (*Cinnamomum loureiroi*)*,* Salad burnet (*Sanguisorba minor*)*, Salep* (*Orchis mascula*)*,* Sassafras (*Sassafras albidum*)*,* Savory, summer (*Satureja hortensis*)*,* Savory, winter (*Satureja montana*)*, Silphium, silphion, laser, laserpicium, lasarpicium* (Ancient Roman cuisine, Ancient Greek cuisine), Shiso (Perilla frutescens), Sorrel (*Rumex acetosa*)*,* Sorrel, sheep (*Rumex acetosella*), Spearmint (*Mentha spicata*), Spikenard (*Nardostachys grandiflora* or *N. jatamansi*)*,* Star anise (*Illicium verum*)*,* Sumac (*Rhus coriaria*), Sweet woodruff (*Galium odoratum*)*,* Szechuan pepper, Sichuan pepper (*Zanthoxylum piperitum*)*,* Tarragon (*Artemisia dracunculus*)*,* Thyme (*Thymus vulgaris*)*,* Thyme, lemon (*Thymus* × *citriodorus*)*,* Turmeric (*Curcuma longa*)*,* Vanilla (*Vanilla planifolia*), Vietnamese cinnamon (*Cinnamomum loureiroi*)*,* Vietnamese coriander (*Persicaria odorata*), Voatsiperifery (*Piper borbonense*)*,* Wasabi (*Wasabia japonica*)*,* Water-pepper, smartweed (*Polygonum hydropiper*)*,* Watercress (*Rorippa nasturtium-aquatica*), Wattleseed (from about 120 spp. of Australian *Acacia*)*,* White mustard (*Sinapis alba*)*,* Wild betel (*Piper sarmentosum*) (Southeast Asia), Wild thyme (*Thymus serpyllum*)*,* Willow herb (*Epilobium parviflorum*)*,* Winter savory (*Satureja montana*)*,* Wintergreen (*Gaultheria procumbens*)*,* Wood avens, herb bennet (*Geum urbanum*)*,* Woodruff (*Galium odoratum*)*,* Wormwood, absinthe (*Artemisia absinthium*)*,* Yellow mustard (*Brassica hirta = Sinapis alba*)*, Yerba buena,* any of four different species, many unrelated, *Za'atar* (herbs from the genera *Origanum, Calamintha, Thymus,* and/or *Satureja*), *Zedoary* (*Curcuma zedoaria*).
- teas and herbal teas such as:
   Anise tea (seeds or leaves), Asiatic penny-wort leaf, Artichoke tea, Bee Balm, Boldo, Burdock, Caraway tea, Catnip tea, Chamomile tea, Che Dang tea (*Ilex causue* leaves), Chinese knot-weed tea, Chrysanthemum tea, Cinnamon, Coca tea, Coffee tea leaves and coffee cherry tea, Cerasse, Citrus peel (including bergamot, lemon and orange peel), Dandelion coffee, Dill tea, Echinacea tea, Elderberry, European Mistletoe (*Viscum album*)*,* Essiac tea, Fennel, Gentian, Ginger root, Ginseng, Goji, Hawthorn, Hibiscus, Ho Yan Hor Herbal Tea, Honeybush, Horehound, Houttuynia, Hydrangea tea (*Hydrangea serrata* Amacha), Jiaogulan, Kapor tea, Kava root, Kratom, Kuzuyu, Labrador tea, Lapacho (also known as *Taheebo*)*,* Lemon Balm, Lemon and ginger tea, Lemon grass, Luo han guo, Licorice root, Lime blossom, Mint, Mountain Tea, Neem leaf, Nettle leaf, New Jersey Tea, Noni tea, Oksusu cha, Pennyroyal leaf, Pine tea, Qishr, Red clover tea, Red raspberry leaf, Roasted barley tea, Roasted wheat, Rooibos (Red Bush), Rose hip, Roselle petals (species of Hibiscus; aka Bissap, Dah, etc.), Rosemary, Sagebrush, California Sagebrush, Sage, Sakurayu, Salvia, Scorched rice, Skullcap, Serendib (tea), Sobacha, Spicebush (Lindera benzoin), Spruce tea, Staghorn sumac fruit, Stevia, St. John's Wort, Tea (*Camellia sinensis* )*,* Thyme, Tulsi, Holy Basil, *Uncaria tomentosa,* commonly known as Cat's Claw, Valerian, Verbena (Vervains), Vetiver, Wax gourd, Wong Lo Kat, Woodruff, and/or Yarrow.
- medicinal plants such as:
   Açai (*Euterpe oleracea,* Alfalfa (*Medicago sativa*)*,* Arnica (*Arnica Montana,* Asthma weed (*Euphorbia hirta*), Astragalus (*Astragalus propinquus*)*,* Barberry (*Berberis vulgaris*) *,* Belladonna (*Atropa belladonna,* Bilberry (*Vaccinium myrtillus*)*,* Bitter gourd (*Momordica charantia*)*,* Bitter leaf (*Vernonia amygdalina*)*,* Bitter orange (*Citrus* × *aurantium*), Black cohosh (*Actaea racemosa*), Blessed thistle (*Cnicus benedictus*)*,* Blueberries (genus *Vaccinium*)*,* Burdock (*Arctium lappa*), Cat's claw (*Uncaria tomentosa*), Cayenne (*Capsicum annuum*)*,* Celery (A*pium graveolens*)*,* Chamomille (*Matricaria recutita* and *Anthemis nobilis*)*,* Chaparral (*Larrea tridentata*), Chasteberry (*Vitex agnus-castus*)*,* Chili (*Capsicum frutescens*), Cinchona, Clove (*Syzygium aromaticum*)*,* Coffee senna (*Cassia occidentalis*) ,Comfrey (*Symphytum officinale*)*,* Cranberry (*Vaccinium macrocarpon*)*,* Dandelion (*Taraxacum officinale*)*,* Dong quai (*Angelica sinensis*)*,* Elderberry (*Sambucus nigra*)*,* Eucalyptus (*Eucalyptus globulus*) *,* European Mistletoe (*Viscum album*)*,* Evening primrose (*Oenothera* spp.), Fenugreek (*Trigonella foenum-graecum*), Feverfew (*Tanacetum parthenium*)*,* Flaxseed (*Linum usitatissimum*)*,* Garlic (*Allium sativum*)*,* Ginger (*Zingiber officinale*)*,* Gingko (*Gingko biloba*) , Ginseng (*Panax ginseng* and *Panax quinquefolius*) *,* Goldenseal (*Hydrastis canadensis*) *,* Grape (*Vitis vinifera*) *,* Guava (*Psidium guajava*), Hawthorn (specifically *Crataegus monogyna* and *Crataegus laevigata*), Hoodia (*Hoodia gordonii*)*,* Horse chestnut (*Aesculus hippocastanum*) *,* Horsetail (*Equisetum arvense*)*,* Jamaica dogwood (*Piscidia erythrina* or *Piscidia piscipula*), Kava (*Piper methysticum*)*,* Kha , Konjac (*Amorphophallus konjac*)*,* Kratom (*Mitragyna speciosa*), Kanna (*Sceletium tortuosum*)*,* Lavender (*Lavandula angustifolia*), Lemon (*Citrus limon*)*,* Licorice root (*Glycyrrhiza glabra*)*,* Marigold (*Calendula officinalis*)*,* Marsh mallow (*Althaea officinalis*)*,* Milk thistle (*Silybum marianum*)*,* Neem (*Azadirachta indica*)*,* Noni (*Morinda citrifolia*)*,* Oregano (*Origanum vulgare*)*,* Papaya (*Carica papaya*)*,* Peppermint (*Mentha x piperita*) *,* Purple coneflower (*Echinacea purpurea*)*,* Passion Flower (*Passiflora*), Red clover (*Trifolium pratense*)*,* Rosemary (*Rosmarinus officinalis*)*,* Sage (*Salvia officinalis*)*,* Syrian Rue (aka Harmal) (*Peganum harmala*), St. John's wort (*Hypericum perforatum*), Saw palmetto (*Serenoa repens*)*,* Thunder God Vine (*Tripterygium wilfordii*), Thyme (*Thymus vulgaris*)*,* Tulasi (*Ocimum tenuiflorum* or Holy Basil), Turmeric (*Curcuma longa*)*,* Umckaloabo (*Pelargonium sidoides*)*,* Valerian (*Valeriana officinalis*)*,* White willow (*Salix alba*)*,* and/or Yerba santa (*Eriodictyon crassifolium*)*.*

In step d) of the inventive method the one or more at least partially fibrous residues are subjected to an extrusion process.

Extrusion according to the invention is a process used to create objects of a fixed cross-sectional profile. For example, the at least partially fibrous residue is pushed or drawn through a die of a desired cross-section. By using extrusion products having a very complex cross-sections can be manufactured, and materials that are brittle can be processed, because the material only encounters compressive and shear stresses. Extrusion may be continuous (theoretically producing indefinitely long material) or semi-continuous (producing many pieces). The extrusion process can be done with the material hot or cold, i.e. the extrusion may be performed as hot-, cold- or warm extrusion depending on the starting materials. The general characteristics of these processes, i.e. with respect to temperature, pressure etc., are known to the skilled person.

The extrusion may be carried out within the conditions generally used for this process and/or which are particularly useful for food products. The skilled person will be aware of useful temperature and pressure ranges. For example, extrusion may be carried out in a range of about 40 to 500 °C depending on whether it is a cold-, warm- or hot extrusion. For example, temperatures of up to about 50 °C, up to about 100 °C, up to about 200 °C, up to about 300 °C, up to about 400 °C or up to about 500 °C can be applied. Depending on the temperature used, the processing or exposure time may be up to about 10 s, up to about 30 s, up to about 1 min, up to about 5 min, up to about 30 min, up to about 1 h, and the like. Also any known type of extruders can be used in the present invention, such as, but not limited to, ram extruder, screw extruder, double screw extruder, planetary-gear extruder and cascade extruder, or the like. The extruder may be chosen depending on the starting material and the desired product type.

In one embodiment of the present invention the at least partially fibrous residue from one plant is fed into the extruder in the form obtained after step b) or in any other form suitable for the extrusion process. After the extrusion process, the product in its final form is obtained. The product which is obtained at the end of step d) is generally in the form of a strand which may be cut to the desired size using any conventional cutting device.

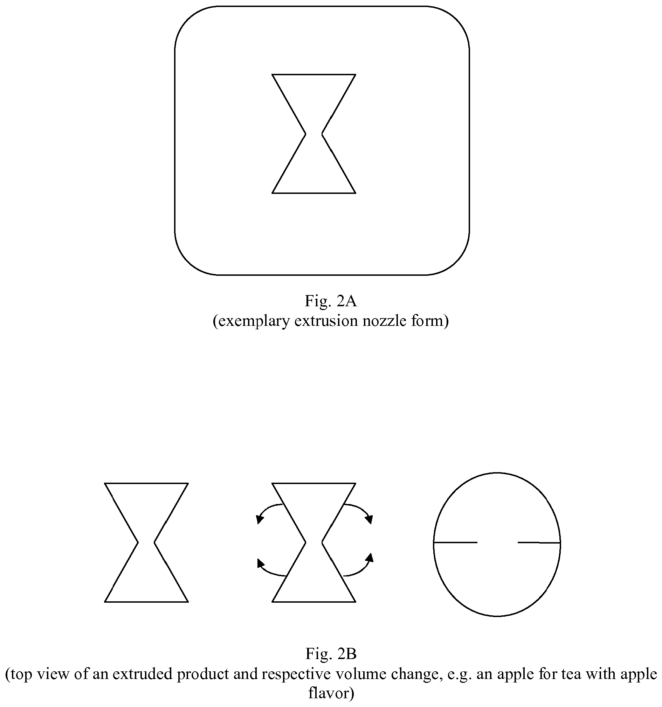

Generally, any form which can be obtained via an extrusion process can be applied in processing the fibrous plant product of the invention. Even complex forms may be suitable. The final form of the extrusion product depends on the die used. For example, possible forms may be, but are not limited to, sheets of different widths and thicknesses, strands with different forms such as a circular form, star form, triangular form, square form, T-shaped form, U-shaped form, X-shaped forms, forms of animals, fruits, letters, faces, forms which do not have a known or regular shape and the like. Suitable die forms may also be such forms which are used in the preparation of noodles, cereals, bread, sweets, snack foods, salty snacks and the like. Fig. 2A shows an exemplary extrusion die or nozzle form, but is not limited to.

The plant extract is added to the residue before and/or during and/or after the extrusion process. In one embodiment the plant extract is added before the extrusion process. In a further embodiment, the plant extract is added during the extrusion process. In a still further embodiment the plant extract is added after the extrusion process. The plant extract may be from the same plant as the residue. In one embodiment, the plant extract may be from a different plant or may even be a mixture of two or more plant extracts from two or more plants. Moreover, it is possible to add one plant extract (or a mixture of different plant extracts) before the extrusion process starts and to add another plant extract (or a mixture of plant extracts) during and/or after the extrusion process. For example, when using tea or herbs it is possible to include L-menthol at various quantities (such as 6% or 15%) in the finished product. Products so obtained have a distinctive taste and aroma of menthol. In one embodiment the residue and the plant extract are from different plants in order to create new taste experiences.

The plant extract and/or other substances and/or agents described herein are added to the residue by mixing and/or spraying and/or pouring and/or immersion. Depending on the process and time of addition, the plant extract can be applied to the fibrous plant product as a fluid or a gel or a slurry or a powder or may be dissolved in a solvent first before applying it. The plant extract may be added continuously via a respective line or may be added for a particular period of time. Also, the addition may be carried out automatically or manually. Also, the plant extract or mixture of plant extracts may be added at several locations during the extrusion process.

The fibrous residue may be mixed with one or more fibrous residues of one or more further plants prior to be fed into the extruder. For example, two, three, four, five, six, seven, eight, nine, ten or even more different plant residues may be combined. In this way substances from different origin and with different properties, e.g. mechanical or pharmaceutical, can be mixed together to obtain desired product properties. For example, the present invention also allows blending various plants and herbs. In one example, instead of using single plants, such as tea or mint leaves, tea may be replaced by a mixture of, for example, 50% tea and 50% mint leaves (w/w); 50% verbena and 50% mint (w/w); 30% cinnamon and 30% tea and 10% licorice and 10% chamomile and 10% red vine and 10% rooibos (w/w); and many other combinations.

In case two or more plant residues are used in the extrusion process, the residues may be mixed before feeding them into the extruder.

Also and in addition to the above, the fibrous residue can be mixed with a stabilizer prior to be fed into the extruder. For example, the fibrous residue can be mixed with synthetic and/or natural fibers to obtain certain mechanical properties, wherein the fibers are preferably non soluble and/or are approved by food laws.

Soluble fibers may also be added to the plant extract to modify dietary properties. Soluble fibers attract water and may form a gel, which slows down digestion. Soluble fiber delays the emptying of stomach and makes feel full, which helps control weight. Slower stomach emptying may also affect blood sugar levels and have a beneficial effect on insulin sensitivity, which may help control diabetes. Soluble fibers can also help lower LDL ("bad") blood cholesterol by interfering with the absorption of dietary cholesterol. Exemplary sources of soluble fibers are: oatmeal, oat cereal, lentils, apples, oranges, pears, oat bran, strawberries, nuts, flaxseeds, beans, dried peas, blueberries, psyllium, cucumbers, celery, and carrots.

Further to the foregoing listed materials also others materials can be added to improve product physical characteristics, for example cellulose derivatives such as methylcellulose, carboxymethyl cellulose (CMC), hydroxypropyl methyl cellulose (HPMC), starch and starch derivatives such as oxidatively degraded starch, polysaccharides (and their derivatives) such as pectines, gelatins, guar gum, agar, alginates, carrageenans, or synthetic fibers such as the ones made of vinyl chloride or vinyl acetate, polyethylene, polypropylene, polyesters.

One or both of the plant extract and the fibrous plant product may further comprise a matrix of a texturizing agent, such as a non crosslinked hydrocolloid polymer of natural or synthetic origin, preferably of natural origin. The texturizing agent can be selected from at least one of natural agents of plant origin such as carob gum, guar gum, pectins, alginates, carrageenans, agar-agar, gum arabic and cellulose, microbial origin such as xanthan gum natural agents, gellan gum, hyaluronic acid and dextran, animal origin, such as gelatin, collagen and chitosan natural agents, the mineral agents, such as clays and silicas and synthetic polymers such as polyacrylic or polyacrylamide agents, and the like.

According to the present invention, the extrusion process in step d) is carried out with two or more at least partially fibrous residues in a then called co-extrusion process. Thus, co-extrusion in the sense of the present invention means that different residues are extruded separately through different die openings (nozzles) in two or more separate extruders and are processed afterwards, i.e. the residues are not mixed within the extruder. In this case, two or more extruders provide extrudates with the same or different shapes. In any case the separate extrudates are combined (i.e. assembled) in the subsequent assembling step e). In one embodiment, the separate extrudates are converged and further processed through one additional extrusion head, die or nozzle. Generally, this assembling step e) is a continuous process to provide a strand of assembled residues, which may be cut to the desired length. For example, the assembling process may be accomplished, but is not limited to, by laminating, twisting, inserting, covering and/or adhering the separate extrudates.

For example two or more sheets made from different residues may be laminated or two or more strands which have been produced simultaneously within different extruders may be twisted. In one embodiment, the lamination or twisting may be made by applying pressure or by using an adhesive suitable for this purpose. In one embodiment one extruded strand may be coated or covered by a simultaneously produced strand from the same or a separate extruder so that one strand is coated by another strand. In a further embodiment, mixtures of different residues may be co-extruded and assembled.

For example, the product according to the invention which may be produced by a co-extrusion process may comprise two, three, four, five or more layers which have been laminated or assembled after the extrusion process, e.g. a first layer 1 comprising a fibrous plant product, a second layer 2 comprising a plant extract with first substance(s), a third layer comprising a plant extract with second substance(s), etc. Each layer may comprise different substance(s) offering a specific effect. Also, additional layers or respective substances in the existing layers can be provided for controlling the sequence and/or amount and/or speed substances are released from the product.

In the co-extrusion process each of the at least fibrous residue may be contacted separately with an extract before and/or during and/or after the extrusion process. In one embodiment the plant extract is added before the co-extrusion process. In a further embodiment, the plant extract is added during the co-extrusion process. In a still further embodiment the plant extract is added after the co-extrusion process. The extract may be from the same plant or may be from another plant. For example, in case two fibrous residues are co-extruded, each fibrous residue may be contacted with the extract from the same plant or from the respective other plant. The one or more plant extracts may be added as a mixture before and/or during and/or after the extrusion process. It is also possible to add the one or more plant extracts to each residue separately. It is also possible that the final assembled, co-extruded product is contacted with one or more extracts, either in addition to any extract which has been used previously in the process or as a sole extract (or mixture of extracts). The extract(s) may generally be applied as discussed above for the extrusion process.

The inventive method further comprises the step e) of assembling two or more of the products obtained by extrusions and/or co-extrusion in step d) in order to obtain a three dimensional shaped product. This means that the products obtained after the extrusion process, which have been cut to a desired length, is assembled to produce a three dimensional form.

The assembly may take place, for example, by a laminating process, a gluing process, by using heat or pressure or any other process which provides a stabile final product and which is suitably used in connection with a food product and which is generally accepted in the food industry, i.e. which is non-toxic and consumable and which provides the necessary strength and durability to the final product.

According to the present invention the residue material is (co-)extruded in a such a way that the product has different material densities to be able to adsorb controlled amounts of liquid at certain locations such that the product expands in a controlled manner and assumes a desired shape when immersed into a liquid.

Further, an optional drying step may be carried out after the (co-)extrusion process.

In one embodiment the assembly is carried out with a product made from one plant, wherein the plant extract from the same or any other plant has been added before, during or after step d). Also, the product obtained from step d) made from one plant product may be contacted with the plant extract from the same or any other plant after the assembly to the final three dimensional product. Also, it is possible to assembly products obtained in step c) which have been made from different plants and which may be contacted with one or more plant extract from the same or any other plant.

For example, a cup may be made by assembling two equally shaped forms which built the wall of the cup. These walls may be made from, for example, but not limited to, peppermint and the bottom may be made from green tea. Thus, different tastes are combined in one cup. Upon poring hot water into the cup, the respective extracts are dissolved and a peppermint/green tea beverage can be obtained. In a further embodiment, the parts of, for example, a cup may be made from the same plant but the walls and the bottom may be contacted with different plant extracts in order to achieve the desired results. Any combination of plants and extracts may be used in order to assemble three dimensional products. In another embodiment C-shaped parts of different sizes may be assembled in order to obtain a circular product having different layers of, for example, different materials (residue and extracts)

Any shape may be assembled by this process, such as, but not limited to, cups, bowls, bottles, cutlery and the like. Alternative shapes are shapes that are, for example, commonly known for pastas that are made using (co-)extrusion, such as Bigoli, Bucatini, Spaghetti, Capellini, Fusili, Tagliatelle, Fettucine, Lasagne, Linguine, Mafaldine, Stringozzi, Scialatelli, Canneloni, Cavatappi, Gemelli, Macaroni, Penne rigate, Rigatoni, Rotini, Sagne 'ncannulate, Campanelle, Capunti, Casarecce, Conchiglie, Farfalle, Fiori, Lumaconi, Lanterne, Rotini, Radiatori, Trofie. In another embodiment, the shapes made by the extrusion processes of the present invention are, for example, braids or braided ropes (such as ropes and braids made from two, three of more strings, where each string is from the same or different plants), (multi-layer) sheets or (multi-layer) tubes (where each layer is made from the same or different plants) or the like.

In a still further embodiment an agent for protecting volatile substance may be added both to the extract and the residue. For example, the agent may encase the volatile substance upon addition.

In one embodiment a coloring agent may be added before, during or after the extrusion process. The coloring agent should ensure that the final product will not lose its original color as a result of the manufacturing process, for example caused by temperature change, pressure change and/or upon contact with a liquid used during the manufacturing process. In addition, the coloring agent may also be used to color the product which itself is not colored at all or has only pale colors. Suitable coloring agents are food colorings which have been improved by the respective national or regional authority. Further, the coloring agent may also be added in order to preserve the color of the product in use. For example, in case the product is a cup made of one or more tea plants (and extracts), hot water may be added into the cup in order to prepare a tea beverage. During this process the coloring agent may preserve the color of the plant material so that it still looks good during use.

In one embodiment the inventive method comprises the step of adding an expanding agent. An expanding agent is an agent that is capable of providing the property that upon outer influence the product obtained by the inventive process changes its form. For example, such outer influence may be a temperature change or the contact with a liquid. The expanding agent may be used in different concentrations in the product such that the product assumes a desired shape after triggering the shape change. For example, in one embodiment the product obtained after the inventive method may expand upon contact with water to the a shape of a fruit, wherein the product provides the respective flavored beverage. Fig. 2B shows an example of such an expanding process. On the left side the extruded product can be seen which upon outer influence (figure in the middle) expands to the final form (right hand sight).

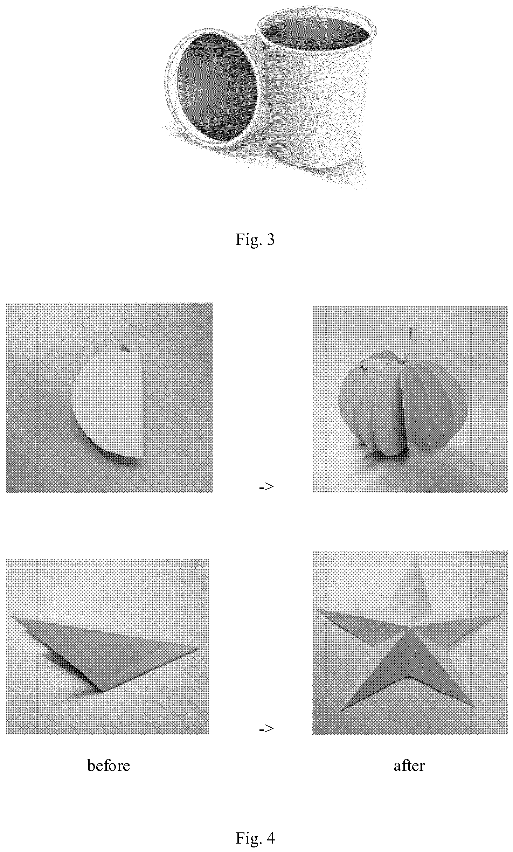

In one embodiment, the products of the present invention, in particular when produced as sheet-like products, can be used to provide Origami or Kirigami folds of reconstituted plant materials. A large range of shapes is available, such as patterns, flowers, animals and the like (list is not exhaustive). An example of Origami folds is shown in Fig. 4. In this example, the forms on the left side will expand to the three dimensional forms on the right side, for example upon contact with water. Preferably, the products manufactured according to the invention are produced in a way that the final design appears when the material is immersed in water or when infusion is completed. In one embodiment, such products comprise the above-mentioned expanding agent.

In one embodiment, the coloring as well as the expanding agent may be provided such that the color or shape change is completed once substantially all soluble substances of the product or the product surface are dissolved. Also, it is encompassed that the color or shape change is completed after a predetermined time after triggering the change, optionally after a typical infusion time.

In a further embodiment the plant extract is added to the residue before the extrusion step and/or after the extrusion step.

In a further embodiment steps a) and b) are accomplished in the extruder of step c).

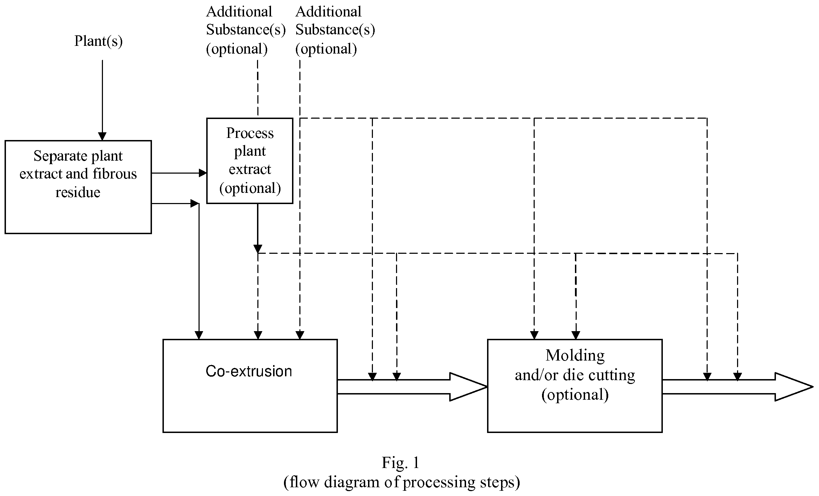

Fig. 1 provides a general flow diagram of the inventive process described above. The flow diagram shows the step of separating the extract and the fibrous residue and how the residue is processes by extrusion optionally die cutting. The extract, which may optionally be further processed, can be added before, during or after the extrusion process. The same holds true for optionally added substances.

In a further embodiment a product comprising a fibrous plant product and a plant extract manufactured in accordance with the present invention is disclosed. Possible products are already mentioned above.

The invention can be used in many areas such as for food, food supplement, medicinal, cosmetic, well-being, nutraceutical or phytotherapeutical applications. The plants mentioned in connection with a specific application may also be utilized in connection with other applications.

The reason for the improved properties of the inventive product is due to the processing of the raw material(s). According to the invention a controlled amount of selected substances can be use in the inventive product, i.e. in the fibrous plant product or the plant extract. If desired, one plant can substantially be reconstituted or reconstructed so that the final product comprises many or substantially all substances of the raw material. The reconstructed product is advantageous in comparison to the original plant, as the substances from the reconstructed product can be released in a controlled way, e.g. faster than from the natural plant. In addition, it may be desired to mix other substances from other plants or synthetical substances into the edible product to alter its mechanical or other properties. Likewise it can be desired to separate certain undesired substances, e.g. pesticides, metals, polyphenols or substances naturally contained in the plant.

The product manufactured according to the invention can be used as a spice or condiment or flavor to supplement or alter the ingredients of a food, e.g. to improve one or more of taste, texture or mouthfeel, or to add useful substances such as minerals or vitamins. For example, the product can be used with hot, warm or cold food or a solvent such as water, e.g. to prepare a soup or sauce or dressing, or milk in order to prepare a flavored milk product. Substances from the product are infused or released into the solvent or food. On the other hand, the product might only release certain substances, e.g. the substances contained in the plant extract and/or a part of substances of the fibrous plant product. In the latter case the remaining substances, i.e. what is not dissolved in the food, may be in a form to be separated from the food, e.g. in one piece.

The product can be for direct consumption, e.g. by eating, drinking, swallowing, gargling, sucking or chewing. The product can be a sweet, a candy, a chew gum or a sheet like paper. Depending on the purpose of the product, certain substances may be released once the product comes into contact with saliva, i.e. in the mouth. Other substances may remain in the product and only be released in other digestion steps. In this way it can be controlled where the respective substance(s) shall unfold its effect.

In one embodiment, the product manufactured according to the invention is used as a container (cup, bowl, bottle, etc.) into which hot or cold liquids are added. The extract will be dissolved in the liquid and the respective flavored liquid will be obtained, such as tea, milk, coffee, soda or the like, having an improved or altered taste, flavor and/or aroma. Even soup, sauce or any other liquid food may be flavored in such a container.

In one embodiment, cutlery, such as spoons, knives and forks may be made by the inventive process, which may then provide (additional) taste and flavor to the food during eating.

In a further embodiment, the products manufactured according to the invention may be used as a kind of bouillon cube which may flavor soups, wherein the cube as such is not dissolving. Such "cubes" may have any form which can be produced with the present invention, such as stars, letters, famous comic figures and the like. In line with this embodiment, the products may also be used for making tea or other beverages.

The products manufactured according to the invention enable a more efficient extraction (up to about 100% solubles can be extracted from the plant) in the sense that more solubles can be released than natural plant ingredients for a given weight of material. The products also provide a faster extraction (than with a conventional extraction made from the vegetal material in its natural non converted form). Specifically, the compositions manufactured according to the invention have improved efficiency, e.g. in boiling water or in non-heated water or water at room temperature.

The process for making the compositions of the invention also allows for specifically adjusting the final composition of the products, such as to remove from the soluble or the non-soluble portion(s) for example foreign matters, components altering taste and/or odor, or caffeine, pesticides, heavy metals, mycotoxins, toxicants and allergenic molecules such as coumarin, farnesol, geraniol, limonene, linalol, safrole, methyleugenol, or by adding to the soluble or the non-soluble portion(s) for example desirable additives, such as sweeteners, sugars, flavors, casings, vitamins, colorants, minerals, taste enhancers.

In another embodiment, the soluble portion in the reconstituted material manufactured according to the invention can be precisely adjusted (decreased as compared to standard level, at standard level, or increased as compared to standard level). A key benefit is that the level of ingredients in the reconstituted material can be precisely increased to a level higher than in the original natural form, thus allowing for products with a higher concentration of desired substances. The adjustment of ingredients can also guarantee a consistent, standardized level of delivered ingredients to compensate natural variations of substances, i.e. active ingredients, in plants.

The combination of different plant materials through the inventive process into a single product impregnated with extracts from different plants (the same plant or blends) offers new taste experiences and additive or synergistic effects. For example, it is known that combinations of certain plant extracts or combinations of certain plant ingredients have additive or synergistic effects, such as, for example, a mixture of hops and valerian extracts for use in treating insomnia and vigilance (Blumenthal and al., J. Herbal Medicine, expanded Commission E monographs, American Botanical Council, Austin, 2000, 394-400), or mixtures of oregano and cranberry extracts for use in treating *H. pylori* infections (Lin et al., Appl. Environ. Microbiol. December 2005, vol. 71, no. 12, 8558-8564), or different mixtures of extracts of *S. baicalensis, D. morifolium, G. uralensis and R. rubescens* tested for their additive or synergistic effect in prostate cancer cell lines (Adams et al., Evid Based Complement Alternat Med. 2006 March; 3(1): 117-124).

In sum, the reconstituted plant products manufactured according to the invention provide several benefits and advantages, such as
- the provision of products with higher extraction yield and extraction speed;
- the provision of a preferably dispersible and biodegradable product;
- the ability to adjust the content of active ingredients (such as polyphenols, essential oils and the like) to provide a consistent composition;
- the ability to adjust (reduce) the content of undesired constituents (such as pesticides, caffeine and the like);
- the ability to provide new sensory characteristics (such as adjusting intensity of flavor, mixture of various plants and the like); and
- reduction of the bacterial load during the manufacturing process.

The following examples are not within the scope of the appended claims.

The examples are given solely for the purpose of illustration.

### Examples

### Example 1

### Method of making the reconstituted plant product

As raw material a black tea (*Camellia sinensis*) plant was used. The plant was mixed with water with a plant/water ratio of 1 to 5 by weight and the mixture was heated at 85 °C for 20 minutes. Subsequently, the aqueous portion was separated from the fibrous portion by an extraction step in a hydraulic press. Afterwards, the fibrous residue was again heated at 85 °C for 10 minutes with a plant/water ratio of 1 to 5 by weight. Again, the aqueous portion was separated from the fibrous portion by an extraction step in a hydraulic press. Then, the fibrous residue was refined in a Valley beater at 1.4% consistency for 10 minutes. As a next step, cellulosic fibers and in particular (a blend of abaca, hardwood and softwood pulps, with the respective ratios: 60/10/30) were added to the fibrous residue with a fibrous residue/woodpulp ratio of 5 to 1 in weight and the product was extruded or molded. Extract was added before, during or after extrusion.

### Example 2

### Reconstitution of Rooibos leaves

A reconstituted product was made according to the following method: Rooibos (*Aspalathus linearis*) was initially heated at 85 °C for 20 minutes with a rooibos/water ratio of 1 to 5 by weight. This was followed by an extraction step in a hydraulic press to separate the aqueous portion from the rooibos fiber portion. The recovered rooibos fiber portion was again heated at 85 °C for 10 minutes with a rooibos/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the rooibos fibrous residue with a rooibos fiber/woodpulp ratio of 5 to 1 in weight and a wet strength agent was then added to the fibrous portion at a level of 5% w/w in order to make hand sheets. The aqueous portion was concentrated in an evaporator to a solid concentration of 50% and then extruded or molded. Extract was added before, during or after extrusion.

### Example 3

### Reconstitution of Mint leaves

A reconstituted product was made according to the following method: Mint (*Mentha x piperita*) was initially heated at 85 °C for 20 minutes with a mint/water ratio of 1 to 5 by weight. This was followed by an extraction step in a hydraulic press to separate the aqueous portion from the rooibos fiber portion. The recovered mint fiber portion was again heated at 85 °C for 10 minutes with a mint/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the mint fibrous residue with a mint fiber/woodpulp ratio of 5 to 1 in weight and a wet strength agent was then added to the fibrous portion at a level of 5% w/w and the mixture was extruded or molded. Extract was added before, during or after extrusion.

## Claims

1. A method of manufacturing a product comprising fibrous plant residues and plant extracts, the method comprising the steps of:
a) extracting substances of plants to obtain plant extracts and fibrous plant residues;
b) separating the plant extracts from the fibrous plant residues;
c) feeding two or more different fibrous plant residues into two or more separate extruders, and then
d) separately extruding the two or more different fibrous plant residues through die openings of the two or more separate extruder to obtain two or more extrudates, and
e) assemble the two or more extrudates to obtain a three dimensionally shaped product,
wherein the plant extracts are added to the two or more fibrous plant residues before and/or during and/or after step d);
wherein in step d) the two or more different fibrous plant residues are extruded in such a way that the product has different material densities to be able to absorb controlled amounts of liquid at certain locations such that the product expands in a controlled manner and assumes a desired shape when immersed into a liquid.

2. The method of claim 1, wherein the assembling step is carried out by laminating, twisting, inserting, covering and/or adhering the two or more extrudates.

3. The method of any of the preceding claims, further comprising the step of concentrating the plant extract and/or purifying the plant extract and/or flavoring the plant extract and/or mixing the plant extract with one or more other plant extracts and/or mixing the plant extract with one or more further substances.

4. The method of any of the preceding claims, further comprising the step of adding one or more of a filler, a wet strength agent, an agent for protecting volatile substances, a coloring agent, and/or an expanding agent before and/or during and/or after step d), wherein the expanding agent is an agent that is capable of providing the property that upon outer influence the product changes its form.

5. The method of claim 4, wherein the expanding agent is provided in different concentrations in the product such that the product assumes a desired shape after triggering the shape change.

6. The method of any of the preceding claims, wherein in step d) the two or more fibrous plant residues are extruded, refined and afterwards molded and/or die-cut.

7. The method of claim 6, wherein plant extracts are added to the fibrous plant residues before the extrusion step and/or during the extrusion step and/or after the extrusion step and/or before the molding step and/or after the molding step and/or after the die-cutting step.

8. The method of any of the preceding claims, wherein the plant extract and/or other substances and/or agents are added to the residue by mixing and/or spraying and/or pouring.

## Patentansprüche

1. Verfahren zur Herstellung eines Produkts, umfassend faserige Pflanzenrückstände und Pflanzenextrakte, wobei das Verfahren die Schritte umfasst:
a) Extrahieren von Substanzen aus Pflanzen, um Pflanzenextrakte und faserige Pflanzenrückstände zu erhalten;
b) Trennen der Pflanzenextrakte von den faserigen Pflanzenrückständen;
c) Einspeisen von zwei oder mehr verschiedenen faserigen Pflanzenrückständen in zwei oder mehr separate Extruder und dann
d) getrenntes Extrudieren der zwei oder mehr verschiedenen faserigen Pflanzenrückstände durch Düsenöffnungen von zwei oder mehr separaten Extrudern, um zwei oder mehr Extrudate zu erhalten, und
e) Zusammenfügen der zwei oder mehr Extrudate, um ein dreidimensional geformtes Produkt zu erhalten,
wobei die Pflanzenextrakte zu den zwei oder mehr faserigen Pflanzenrückständen vor und/oder während und/oder nach Schritt d) zugegeben werden;
wobei in Schritt d) die zwei oder mehr verschiedenen faserigen Pflanzenrückstände auf eine Weise extrudiert werden, dass das Produkt verschiedene Materialdichten aufweist, um in der Lage zu sein, kontrollierte Mengen an Flüssigkeit an bestimmten Stellen zu absorbieren, so dass das Produkt auf kontrollierte Weise expandiert und eine gewünschte Form annimmt, wenn es in eine Flüssigkeit eingetaucht wird.

2. Verfahren nach Anspruch 1, wobei der Zusammenfügungsschritt durch Laminieren, Verdrehen, Insertieren, Abdecken und/oder Verkleben der zwei oder mehr Extrudate durchgeführt wird.

3. Verfahren nach einem der vorhergehenden Ansprüche, ferner umfassend den Schritt des Konzentrierens des Pflanzenextrakts und/oder Aufreinigens des Pflanzenextrakts und/oder Aromatisierens des Pflanzenextrakts und/oder Mischens des Pflanzenextrakts mit einem oder mehreren anderen Pflanzenextrakten und/oder Mischens des Pflanzenextrakts mit einer oder mehreren weiteren Substanzen.

4. Verfahren nach einem der vorhergehenden Ansprüche, ferner umfassend den Schritt des Zugebens eines oder mehrerer eines Füllstoffs, eines Nassfestigkeitsmittels, eines Mittels zum Schützen flüchtiger Substanzen, eines Färbemittels und/oder eines Expansionsmittels vor und/oder während und/oder nach Schritt d), wobei das Expansionsmittel ein Mittel ist, welches in der Lage ist, die Eigenschaft zu verleihen, dass das Produkt bei äußerer Einwirkung seine Form ändert.

5. Verfahren nach Anspruch 4, wobei das Expansionsmittel in verschiedenen Konzentrationen in dem Produkt bereitgestellt wird, so dass das Produkt nach Auslösen der Formänderung eine gewünschte Form annimmt.

6. Verfahren nach einem der vorhergehenden Ansprüche, wobei in Schritt d) die zwei oder mehr faserigen Pflanzenrückstände extrudiert, verfeinert und anschließend geformt und/oder ausgestanzt werden.

7. Verfahren nach Anspruch 6, wobei Pflanzenextrakte zu den faserigen Pflanzenrückständen vor dem Extrusionsschritt und/oder während des Extrusionsschritts und/oder nach dem Extrusionsschritt und/oder vor dem Formsschritt und/oder nach dem Formschritt und/oder nach dem Ausstanzschritt zugegeben werden.

8. Verfahren nach einem der vorhergehenden Ansprüche, wobei das Pflanzenextrakt und/oder andere Substanzen und/oder Mittel durch Mischen und/oder Sprühen und/oder Gießen zu den Rückständen zugegeben werden.

## Revendications

1. Procédé de fabrication d'un produit comprenant des résidus végétaux fibreux et des extraits végétaux, le procédé comprenant les étapes suivantes :
a) l'extraction de substances de plantes pour obtenir des extraits végétaux et des résidus végétaux fibreux ;
b) la séparation des extraits végétaux des résidus végétaux fibreux ;
c) l'introduction de deux ou plus de deux résidus végétaux fibreux différents dans deux ou plus de deux extrudeuses distinctes, puis
d) l'extrusion séparée des deux ou plus de deux résidus végétaux fibreux différents à travers des ouvertures de matrice des deux ou plus de deux extrudeuses séparées pour obtenir deux ou plus de deux extrudats, et
e) l'assemblage des deux ou plus de deux extrudats pour obtenir un produit de forme tridimensionnelle, dans lequel les extraits végétaux sont ajoutés aux deux ou plus de deux résidus végétaux fibreux avant et/ou pendant et/ou après l'étape d) ;
dans lequel, dans l'étape d), les deux ou plus de deux résidus végétaux fibreux différents sont extrudés de sorte que le produit présente des densités de matériau différentes pour pouvoir absorber des quantités de liquide contrôlées au niveau de certains endroits de sorte que le produit se dilate d'une manière contrôlée et adopte une forme souhaitée lorsqu'il est immergé dans un liquide.

2. Procédé selon la revendication 1, dans lequel l'étape d'assemblage est mise en œuvre par stratification, torsion, insertion, recouvrement et/ou collage des deux ou plus de deux extrudats.

3. Procédé selon l'une quelconque des revendications précédentes, comprenant en outre l'étape de concentration de l'extrait végétal et/ou de purification de l'extrait végétal et/ou d'aromatisation de l'extrait végétal et/ou de mélange de l'extrait végétal avec un ou plusieurs autres extraits végétaux et/ou de mélange de l'extrait végétal avec une ou plusieurs autres substances.

4. Procédé selon l'une quelconque des revendications précédentes, comprenant en outre l'étape d'ajout d'un ou de plusieurs d'une charge, d'un agent de résistance à l'humidité, d'un agent de protection de substances volatiles, d'un agent colorant et/ou d'un agent expansif avant et/ou pendant et/ou après l'étape d), dans lequel l'agent expansif est un agent qui est apte à fournir la propriété qui, sous une influence extérieure, modifie la forme du produit.

5. Procédé selon la revendication 4,
dans lequel l'agent expansif est fourni en différentes concentrations dans le produit de sorte que le produit adopte une forme souhaitée après le déclenchement du changement de forme.

6. Procédé selon l'une quelconque des revendications précédentes, dans lequel, dans l'étape d), les deux ou plus de deux résidus végétaux fibreux sont extrudés, raffinés et ensuite moulés et/ou découpés par matrice.

7. Procédé selon la revendication 6, dans lequel des extraits végétaux sont ajoutés aux résidus végétaux fibreux avant l'étape d'extrusion et/ou pendant l'étape d'extrusion et/ou après l'étape d'extrusion et/ou avant l'étape de moulage et/ou après l'étape de moulage et/ou après l'étape de découpe par matrice.

8. Procédé selon l'une quelconque des revendications précédentes, dans lequel l'extrait végétal et/ou d'autres substances et/ou agents sont ajoutés au résidu par mélange et/ou pulvérisation et/ou coulage.
